# EUROPÄISCHE PATENTSCHRIFT

(11) **EP 2 562 014 B1**
(45) Veröffentlichungstag und Bekanntmachung des Hinweises auf die Patenterteilung: **18.06.2014**
(21) Anmeldenummer: 11006896.2
(22) Anmeldetag: 24.08.2011
(51) Int. Cl.: B60D 5/00

(54) **Balg eines Übergangs zwischen zwei gelenkig miteinander verbundenen Fahrzeugen eines Gelenkfahrzeuges**
Bellows of an intersection between two vehicles of an articulated vehicle with a jointed connection
Soufflet d'un passage entre deux véhicules reliés de manière articulée d'un véhicule articulé

(43) Veröffentlichungstag der Anmeldung: 27.02.2013
(73) Patentinhaber: Hübner GmbH & Co. KG, 34123 Kassel (DE)
(72) Erfinder: Mosauer, Knud, 34127 Kassel (DE)
(74) Vertreter: Walther, Walther & Hinz GbR

(56) Entgegenhaltungen:
- EP-A1- 2 149 462
- EP-A1- 2 149 463
- DE-U1-202005 008 670

## Beschreibung

Die Erfindung betrifft einen Balg eines Übergangs zwischen zwei gelenkig miteinander verbundenen Fahrzeugen eines Gelenkfahrzeugs, wobei der Balg mindestens einen im Wesentlichen U-förmig umlaufenden Rahmen aufweist, wobei der im Wesentlichen U-förmig umlaufende Rahmen mindestens eine Kuppeleinrichtung zur Anbindung einer wellen- oder faltenbalgförmigen Abdeckung nach dem Oberbegriff des Anspruchs 1 aufweist.

Gelenkfahrzeuge sind aus dem Stand der Technik bekannt. So sind sowohl Schienenfahrzeuge bekannt, die durch ein Gelenk miteinander verbunden sind als auch z. B. Gelenkbusse. Bei Gelenkbussen ist es nunmehr so, dass der Balg als Teil des Überganges zwischen den beiden Fahrzeugteilen eines Gelenkbusses aufgrund der zu durchfahrenden Kurvenradien relativ lang ist. Insofern ist vorgesehen, dass der Balg mittig durch einen sogenannten Mittelrahmen geteilt ist.

Der Übergang umfasst nicht nur den Balg, sondern auch die von dem Balg überspannte Brücke bei einem Schienenfahrzeug, oder die Plattform bei einem Gelenkbus. Der kastenförmige Balg umgibt, wie bereits ausgeführt mindestens die Übergangsbrücke, bei einem Gelenkbus allerdings nicht nur die Brücke sondern auch noch das Gelenk. Zwischen der Übergangsbrücke oder auch der Plattform bei einem Gelenkbus und der Seitenwand des Balges besteht üblicherweise ein Abstand. Zur Überbrückung des Abstandes ist eine sogenannte Bodenabdeckung oder auch Spurfugenabdeckung bekannt. Eine solche Spurfugenabdeckung ist in der Seitenansicht etwa trapezförmig ausgebildet und überdeckt die Spurfuge. Eine solche Spurfugenabdeckung ist beispielsweise in der EP 0 830 262 B1 beschrieben.

Aus dieser Literaturstelle ist im Übrigen auch ein zweigeteilter Balg bekannt, wobei die beiden Balghälften durch den Mittelrahmen getrennt sind. Auch die Spurfugenabdeckung zeigt im Bereich des Mittelrahmens des Balges eine entsprechende Trennung. Das heißt, die Spurfugenabdeckung weist im Bereich des Mittelrahmens des Balges einen in der Seitenansicht etwa trapezförmigen Befestigungsrahmen auf. Der Befestigungsrahmen ist endseitig mit dem Mittelrahmen des Balges verbunden. Zur Befestigung des Befestigungsrahmens für die Spurfugenabdeckung oder auch Bodenabdeckung genannt, weist der Befestigungsrahmen endseitig jeweils Befestigungsblöcke auf, die einerseits mit dem Befestigungsrahmen und andererseits mit dem Mittelrahmen verschraubt sind. Eine solche Verbindung findet zu beiden Enden des Befestigungsrahmens am Mittelrahmen statt. Das heißt, dass der Befestigungsrahmen starr mit dem Mittelrahmen verbunden ist. Der Befestigungsrahmen selbst, der in der Seitenansicht in etwa trapezförmig ausgebildet ist, besteht aus einzelnen Rahmengliedern, die untereinander verschweißt sind.

Darüber hinaus ist aus der EP 1741573 B1 ein ebenfalls durch einen Mittelrahmen geteilter Balg eines Gelenkbusses bekannt, wobei jedoch der Mittelrahmen eine Traverse aufweist, die im Dachbereich des Mittelrahmens angeordnet ist, und die beiden Seiten des Mittelrahmens im Seitenwandbereich des Balges verbindet. Die Verbindung der Traverse mit den beiden Seiten des Mittelrahmens erfolgt hierbei durch an den Mittelrahmen angeordnete Konsolen, mit denen die Traverse verschraubt oder verschweißt ist. Auch diese Verbindung zwischen der Traverse einerseits und dem Mittelrahmen des Balges andererseits ist starr ausgebildet.

Aus der DE 20 2005 008 670 U1 ist eine Konstruktion zur Anbindung einer Spurfugenabdeckung an der Seitenwand eines Balges eines Übergangs zwischen zwei gelenkig miteinander verbundenen Fahrzeugen gemäß dem Oberbegriff des Anspruches 1 bekannt. Der Balg des Übergangs umfasst der Kontur des Balges folgend umlaufende Profilleisten, die im Querschnitt U-förmig ausgebildet sind. Durch die U-förmigen Profilleisten werden die beiden eine Falte bildenden Materialstreifen erfasst, wobei zusätzlich zwischen den Materialstreifen eine Befestigungsleiste durch die Profilleisten eingeklemmt gehalten wird. Die Befestigungsleiste ist in der Ansicht U-förmig ausgebildet und zeigt demzufolge zwei Schenkel. Die Spurfugenabdeckung ist ähnlich aufgebaut wie der Faltenbalg des Übergangs. Auch für die Spurfugenabdeckung sind zwei eine Falte bildende Materialstreifen vorgesehen, die durch eine im Querschnitt U-förmige Profilleiste erfasst sind, wobei zwischen den Materialstreifen der Falte eine weitere in der Ansicht U-förmige Befestigungsleiste vorgesehen ist, die mit der Befestigungsleiste am Balg des Übergangs verbunden ist. Die Verbindung zwischen den einzelnen Schenkeln der beiden U-förmigen Befestigungsleisten kann hierbei gelenkig erfolgen.

Nun ist bekannt, dass ein Gelenkfahrzeug und hier insbesondere ein Gelenkbus den verschiedensten Fahrbewegungen ausgesetzt ist. So ist ein solches Fahrzeug Knick,- Nick- und Wankbewegungen ausgesetzt. Knickbewegungen entstehen, wenn das Fahrzeug durch eine Kurve fährt, wohingegen Nickbewegungen bei Überfahren einer Kuppe oder Durchfahren einer Senke auftreten. Wankbewegungen bedingen eine Verdrehung der beiden gelenkig miteinander verbundenen Fahrzeugteile gegeneinander im Sinne einer Torsion. Darüber hinaus gibt es natürlich überlagerte Bewegungen aus einer Kombination der zuvor genannten Bewegungsarten. Die Folge hiervon ist, dass der Balg eine erhebliche Flexibilität aufweisen muss. Dies gilt insbesondere im Busbereich, da hier wie bereits ausgeführt die Gelenkbusse in der Lage sein müssen teilweise sehr enge Kurven zu durchfahren. Insbesondere bei überlagerten Bewegungen wurde festgestellt, dass die am Mittelrahmen angeordneten Kuppeleinrichtungen als da sind der Befestigungsrahmen einerseits und die Traverse andererseits sich relativ zum Mittelrahmen stark bewegen. Hierbei entstehen erhebliche Spannungen im Bereich der Anbindung an den Mittelrahmen, die nicht selten zu einer Zerstörung der Verbindung führen. Darüber hinaus ist festzuhalten, dass die Busse der einzelnen Hersteller derart unterschiedlich sind, dass die Kuppeleinrichtungen wie sie zuvor beschrieben worden sind, für jede Balgserie gesondert, in Abhängigkeit von den vorherrschenden geometrischen Verhältnissen am Mittelrahmen, angefertigt werden müssen. Das heißt, die bekannte Anordnung der Kuppeleinrichtungen am Mittelrahmen des Balges unterliegt nicht nur der Gefahr der Beschädigung, sondern ist darüber hinaus auch relativ aufwendig in der Herstellung und Montage.

Es wurde bereits an anderer Stelle darauf hingewiesen, dass die Befestigungsrahmen zur Aufnahme der falten- oder wellenbalgförmigen Abdeckflächen zur Bildung der Spurfugen- oder Bodenabdeckung im Bereich des Übergangs zum Mittelrahmen dadurch erfolgt, dass Befestigungsblöcke am Befestigungsrahmen im Bereich des Übergangs zum Mittelrahmen angeschraubt werden. Die Befestigung des Befestigungsrahmens am Mittelrahmen selbst erfolgt hierbei durch seitlich in den Befestigungsblock und den Mittelrahmen eingeführte Schrauben. Die Schrauben stehen mit ihrem Schraubenkopf über den Mittelrahmen über, was zur Folge hat, dass der Balg in diesem Bereich an den Schraubenköpfen reibt, was zu einer Beschädigung und schlussendlich auch zu einer Zerstörung des Balges auf Dauer führt.

Des Weiteren wurde darauf hingewiesen, dass der Befestigungsrahmen aus mehreren Rahmengliedern besteht, die trapezförmig zur Bildung des Befestigungsrahmens verschweißt sind. Sowohl der Mittelrahmen als auch der Befestigungsrahmen sind aus einer Aluminiumlegierung hergestellt. Beim Verschweißen von Aluminiumlegierungen sind spezielle Absaugvorrichtungen erforderlich, da die beim Schweißen entstehenden Dämpfe gesundheitsschädlich sind. Die beim anschließenden Verputzen entstehenden Alustäube müssen aufgrund der Explosionsgefahr ebenfalls speziell abgesaugt werden. Darüber hinaus ist eine solche Schweißverbindung starr, was zur Folge hat, ganz ähnlich wie bei der starren Anbindung des Befestigungsrahmens am Mittelrahmen des Balges, dass es zur Rissbildung im Befestigungsrahmen und zwar hier insbesondere im Bereich der Schweißnähte kommt.

Die der Erfindung zugrunde liegende Aufgabe besteht demzufolge darin, die Anbindung der Kuppeleinrichtungen an einem Rahmen, insbesondere dem Mittelrahmen derart vorzunehmen, dass zum Einen die Montage vereinfacht ist, zum Anderen nicht die Gefahr der Beschädigung einerseits des Befestigungsrahmens und andererseits der Verbindung des Befestigungsrahmens zum Mittelrahmen besteht, und darüber hinaus auch die Montage, insbesondere des Befestigungsrahmens einfacher von statten gehen kann. Darüber hinaus soll es möglich werden, dass ein und derselbe Befestigungsrahmen an Bälgen unterschiedlicher Hersteller zum Einsatz gelangen kann.

Zur Lösung der Aufgabe dienen die Merkmale des kennzeichnenden Teil des Anspruchs 1.Hierbei steht die mindestens eine Kuppeleinrichtung durch mindestens ein Gelenk mit dem im Wesentlichen U-förmig umlaufenden Rahmen in Verbindung. Die Kuppeleinrichtung ist als trapezförmiger Befestigungsrahmen ausgebildet ist, wobei an dem Befestigungsrahmen zu beiden Seiten die wellen- oder faltenbalgförmige Abdeckung angeordnet ist. Der trapezförmige Befestigungsrahmen weist mehrere Rahmenglieder auf, die jeweils durch ein Gelenk miteinander verbunden sind. Hierdurch wird erreicht, dass nicht nur der Befestigungsrahmen als solcher von der Bewegung des U-förmig umlaufenden Rahmens durch die dortige Gelenkverbindung entkoppelt ist, sondern vielmehr der Befestigungsrahmen an sich in der Lage ist den auf ihn einwirkenden Kräften im gewissen Umfange nachzugeben. Das heißt, es besteht auch nicht mehr die Gefahr der Beschädigung des Befestigungsrahmens. Der im Wesentlichen U-förmig umlaufende Rahmen ist hierbei vorzugsweise der Mittelrahmen eines geteilten Balges. Die gelenkige Verbindung des Befestigungsrahmens an dem Mittelrahmen mithilfe von im Übergang vom Befestigungsrahmen zum Mittelrahmen angeordneter Gelenke bewirkt, dass der Befestigungsrahmen von der Bewegung des Mittelrahmens bei beispielsweise Wankbewegungen und/oder Knickbewegungen im Wesentlichen entkoppelt ist. Das heißt, es besteht nicht die Gefahr der Rissbildung im Bereich der Verbindung zwischen dem Befestigungsrahmen einerseits und dem Mittelrahmen andererseits.

Nach einem besonderen Merkmal der Erfindung ist das Gelenk als Scharniergelenk ausgebildet. Ein solches Scharniergelenk stellt sich als ein sogenanntes zweidimensionales Gelenk dar, wobei an dieser Stelle darauf hingewiesen wird, dass auch dreidimensionale Gelenke also beispielsweise Kugelgelenke zum Einsatz gelangen können. Denkbar ist des weiteren der Einsatz eines Gelenks aus einem elastischen Werkstoff, zum Beispiel einem Elastomer. In Bezug auf das Gelenk ist im Einzelnen vorgesehen, dass das Scharniergelenk zu beiden Seiten des Scharnierelements jeweils einen Scharnierpartner aufweist, wobei der Scharnierpartner durch den im Wesentlichen U-förmig umlaufenden Rahmen also insbesondere den Mittelrahmen und den Befestigungsrahmen oder die Rahmenglieder aufnehmbar ist. Nach einem weiteren Merkmal ist vorgesehen, dass der im Wesentlichen U-förmig umlaufende Rahmen und die einzelnen Rahmenglieder als Schiene ausgebildet sind, wobei die Schiene im Schienengrund eine im Querschnitt C-förmige, sich längs der Schiene entsprechende Führung zeigt. Durch die C-förmige Führung im Grund der Schiene wird ein Führungsglied des jeweiligen Scharnierpartners gehalten, wobei das Führungsglied in der C-förmigen Führung verschieblich aber feststellbar ist.

Anhand der Zeichnungen wird die Erfindung nachstehend beispielhaft näher erläutert.
- Fig. 1: zeigt schematisch in einer Draufsicht einen zweigeteilten Balg zwischen zwei Fahrzeugen eines Gelenkfahrzeuges;
- Fig. 2: zeigt perspektivisch eine Ansicht von innen auf den Mittelrahmen mit der angedeuteten Spurfugenabdeckung;
- Fig. 3: zeigt in explosionsartiger Darstellung die Anordnung der Gelenke zwischen dem Mittelrahmen einerseits, dem Befestigungsrahmen andererseits und der Traverse, sowie der Verbindung der einzelnen Rahmenglieder durch die Gelenke;
- Fig. 4: zeigt beispielhaft die Verbindung eines Gelenkes in dem als Schiene ausgebildeten Mittelrahmen, der Traverse oder aus den Rahmengliedern gebildeten Befestigungsrahmen.

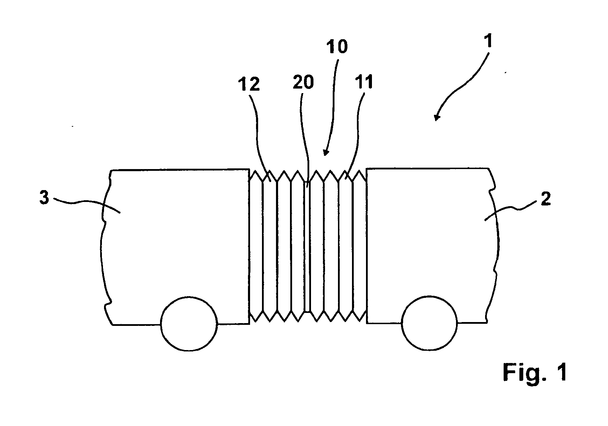

Gemäß Fig. 1 besitzt das Gelenkfahrzeug das Bezugszeichen 1. Das Gelenkfahrzeug umfaßt die beiden Fahrzeuge 2 und 3, die durch den insgesamt mit 10 bezeichneten Balg verbunden sind. Der Balg 10 umfasst die beiden Balghälften 11 und 12, die durch den mit 20 bezeichneten Mittelrahmen miteinander in Verbindung stehen.

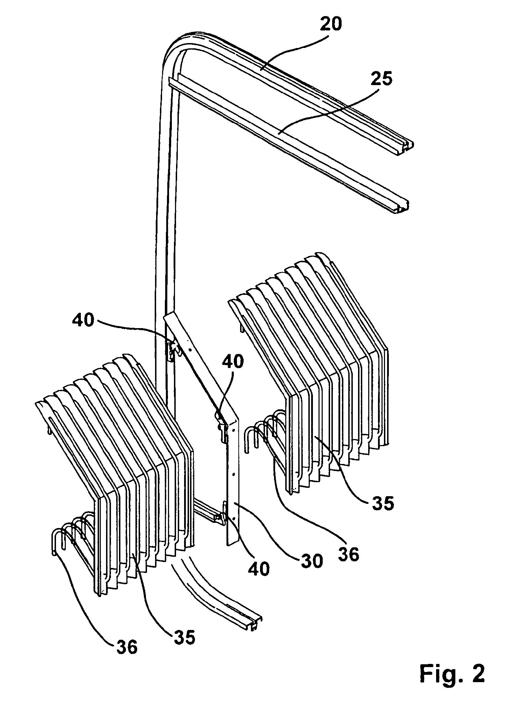

Die Ausbildung der Spurfugenabdeckung und deren Anbindung an den Mittelrahmen ergibt sich aus der schematischen Darstellung gemäß Fig. 2. Der mit 20 bezeichnete Mittelrahmen nimmt hierbei den mit 30 bezeichneten Befestigungsrahmen im unteren Dritten des Mittelrahmens 20 auf. Zu beiden Seiten des Befestigungsrahmens 30 erstreckt sich die wellenbalgförmige Abdeckung 35, wobei die wellenbalgförmige Abdeckung 35 über Balgleisten 36 mit der Seitenwand des Balges in Verbindung stehen. Dies ist nicht näher dargestellt, und auch nicht Gegenstand der Erfindung.

Darüber hinaus zeigt der Mittelrahmen 20 die Traverse 25. Die Traverse 25 erstreckt sich über die Breite des Mittelrahmens, und bildet die Anbindung für die nicht dargestellte falten- oder wellenbalgförmige Abdeckung zur Bildung des Balgdaches.

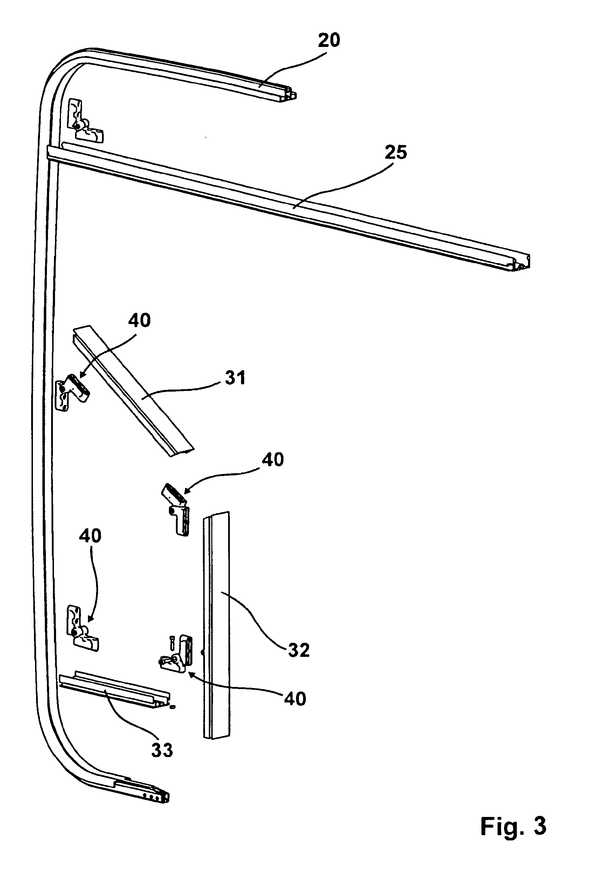

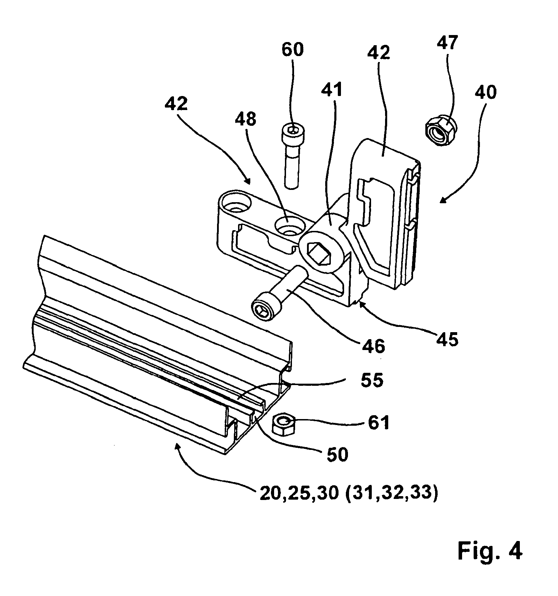

Gegenstand der Erfindung ist nunmehr die Anbindung des Befestigungsrahmens 30 an dem Mittelrahmen und die Verbindung der einzelnen Rahmenglieder 31, 32, 33 untereinander zur Bildung des Befestigungsrahmens 30. Wie sich aus Fig. 3 ergibt, sind hierzu die Gelenke 40 vorgesehen. Das Gelenk 40 ist als Scharniergelenk ausgebildet, was bedeutet, dass es in zwei Raumrichtungen beweglich ausgebildet ist. Aus Fig. 4 ergibt sich nunmehr im Einzelnen die Verbindung des Gelenkes in Form eines Scharniergelenkes mit beispielsweise der Schiene, die den Mittelrahmen 20 bildet. Die Ausbildung der Schienen für die Rahmenglieder 31, 32, 33 und die Traverse 25 entspricht identisch der Schiene für den Mittelrahmen 20. Die Schiene für den Mittelrahmen 20 zeigt im Schienengrund eine im Querschnitt C-förmige Führung 50. Die Öffnung der C-förmigen Führung 50 bildet einen längs verlaufenden Schlitz 55. Das insgesamt mit 40 bezeichnete Gelenk zeigt das Scharnierelement 41 das die beiden Scharnierpartner 42 aufnimmt. Die Achse des Scharnierelementes 41 wird gebildet durch die Schraube 46 und die entsprechende Mutter 47. Ein jeder Scharnierpartner 42 zeigt darüber hinaus mindestens eine Bohrung 48 für eine Schraube 60, wobei die Schraube 60 mit der Mutter 61 in Verbindung steht. Die Mutter 61 lagert in der Führung 50, wobei der Schlitz 55 etwas größer als der Durchmesser des Schaftes der Schraube 60 ist, so dass der Scharnierpartner und damit das Scharnier 40 insgesamt mit Hilfe der Schraube 60 und der Mutter 61 mit der Schiene verbunden werden kann. Um eine Führung der Scharnierpartner 42 in der Schiene des Mittelrahmens zu gewährleisten, weist der Scharnierpartner 42 einen sich in Längsrichtung des Scharnierpartners erstreckenden Führungsbund 45 auf, dessen seitliche Erstreckung in etwa der Breite des Schlitzes 55 entspricht.

Das bedeutet für die Montage, dass zunächst die Mutter 61 mit der Schraube 66 mit Spiel verbunden wird, alsdann das Scharnier 40 in z. B. die Schiene des Mittelrahmens eingesetzt wird, wobei hierbei die Mutter 61 in der C-förmigen Führung 50 einliegt. Nach Positionierung des Scharniers 40 in dem Mittelrahmen wird die Schraube 60 gegen die Mutter 61 angezogen.

### Bezugszeichenliste:

- 1: Gelenkfahrzeug
- 2: Fahrzeug
- 3: Fahrzeug
- 10: Balg
- 11, 12: Balghälften
- 20: Mittelrahmen
- 25: Traverse
- 30: Befestigungsrahmen
- 31, 32, 33: Rahmenglieder
- 35: wellenbalgförmige Abdeckung
- 36: Balgleiste
- 40: Gelenk
- 41: Gelenkelement
- 42: Scharnierpartner
- 45: Führungsbund
- 46: Schraube
- 47: Mutter
- 48: Bohrung
- 50: C-förmige Führung
- 55: Schlitz
- 60: Schraube
- 61: Mutter

## Patentansprüche

1. Balg (10) eines Übergangs zwischen zwei gelenkig miteinander verbundenen Fahrzeugen eines Gelenkfahrzeuges (1), wobei der Balg (10) mindestens einen U-förmig umlaufenden Rahmen aufweist, wobei der im Wesentlichen U-förmig umlaufende Rahmen mindestens eine Kuppeleinrichtung zur Anbindung einer wellen- oder faltenförmigen Abdeckung (35) aufweist,
wobei die mindestens eine Kuppeleinrichtung durch mindestens ein Gelenk (40) mit dem im Wesentlichen U-förmig umlaufenden Rahmen in Verbindung steht,
wobei die Kuppeleinrichtung als in der Seitenansicht in etwa trapezförmiger Befestigungsrahmen (30) ausgebildet ist, wobei an dem Befestigungsrahmen (30) zu beiden Seiten die wellen- oder faltenbalgförmige Abdeckung (35) angeordnet ist
**dadurch gekennzeichnet,**
**dass** der trapezförmige Befestigungsrahmen mehrere Rahmenglieder (31, 32, 33) aufweist, die jeweils durch ein Gelenk (40) miteinander in Verbindung stehen.

2. Balg (10) nach Anspruch 1,
**dadurch gekennzeichnet,**
**dass** der im Wesentlichen U-förmig umlaufende Rahmen der Mittelrahmen (20) eines geteilten Balges (10) ist.

3. Balg (10) nach einem der voranstehenden Ansprüche,
**dadurch gekennzeichnet,**
**dass** das Gelenk (40) als Scharniergelenk ausgebildet ist.

4. Balg (10) nach Anspruch 3,
**dadurch gekennzeichnet,**
**dass** das Scharniergelenk zu beiden Seiten des Scharnierelements jeweils einen Scharnierpartner (42) aufweist, wobei der Scharnierpartner (42) durch den im Wesentlichen U-förmig umlaufenden Rahmen, den Befestigungsrahmen (30) oder die Rahmenglieder (31, 32, 33) aufnehmbar ist.

5. Balg (10) nach Anspruch 4,
**dadurch gekennzeichnet,**
**dass** der im Wesentlichen U-förmig umlaufende Rahmen oder die Rahmenglieder (31, 32, 33) jeweils als Schiene ausgebildet sind, wobei die Schiene im Schienengrund eine C-förmige Führung aufweist, die sich längs der Schiene erstreckt.

6. Balg (10) nach Anspruch 4 oder 5,
**dadurch gekennzeichnet,**
**dass** der Scharnierpartner (42) verschieblich aber feststellbar durch die C-förmige Führung aufgenommen ist.

## Claims

1. A bellows (10) of a gangway between two articulately connected vehicles of an articulated vehicle (1), the bellows (10) having at least one U-shaped circumferential frame, the substantially U-shaped circumferential frame having at least one coupling device for connecting a corrugated or pleated cover (35),
the at least one coupling device being connected to the substantially U-shaped circumferential frame by at least one articulation (40), the coupling device being configured as a mounting frame (30) with an approximately trapezoidal shape in a lateral view, the cover (35) formed as a corrugated or pleated bellows being disposed on both sides of the mounting frame (30),
**characterized in that**
the trapezoidal mounting frame has several frame members (31, 32, 33), which are connected to each other by respectively one articulation (40).

2. The bellows (10) according to claim 1,
**characterized in that**
the substantially U-shaped circumferential frame is the central frame (20) of a divided bellows (10).

3. The bellows (10) according to one of the afore-mentioned claims,
**characterized in that**
the articulation (40) is configured as a hinge joint.

4. The bellows (10) according to claim 3,
**characterized in that**
the hinge joint has respectively one hinge partner (42) on both sides of the hinge element, the hinge partner (42) being receivable by the substantially U-shaped circumferential frame, the mounting frame (30) or the frame members (31, 32, 33).

5. The bellows (10) according to claim 4,
**characterized in that**
the substantially U-shaped circumferential bellows or the frame members (31, 32, 33) are respectively configured as a rail, the rail having a C-shaped guide at the rail base, which extends along the rail.

6. The bellows (10) according to claim 4 or 5,
**characterized in that**
the hinge partner (42) is received by the C-shaped guide in a displaceable but lockable manner.

## Revendications

1. Soufflet (10) pour un passage d'intercommunication entre deux véhicules couplés entre eux de façon articulée, d'un véhicule articulé (1), dans lequel le dispositif à soufflet (10) comporte au moins un cadre périphérique en forme de U, dans lequel le cadre périphérique sensiblement en forme de U comporte au moins une installation de couplage pour attacher une couverture (35) constituée de plis ou de vagues,
dans lequel ladite au moins une installation de couplage est constituée d'au moins une articulation (40) qui est en liaison avec le cadre périphérique sensiblement en forme de U,
dans lequel l'installation de couplage est constituée d'un cadre de fixation (30) sensiblement trapézoïdal, vu sur le côté, dans lequel la couverture (35) en forme de vagues ou de plis est disposée des deux côtés du cadre de fixation (30),
**caractérisé en ce que,**
le cadre de fixation (30) comporte plusieurs éléments de cadre (31, 32, 33) qui sont respectivement couplés au moyen d'une articulation (40).

2. Soufflet (10) selon la revendication 1,
**caractérisé en ce que,**
le cadre périphérique sensiblement en forme de U constitue le cadre central (20) d'un soufflet divisé (10).

3. Soufflet (10) selon l'une quelconque des revendications précédentes,
**caractérisé en ce que**,
l'articulation (40) constitue une articulation de charnière.

4. Soufflet (10) selon la revendication 3,
**caractérisé en ce que**,
l'articulation de charnière comporte des deux côtés des éléments de charnière respectivement un complément de charnière (42), dans lequel le complément de charnière (42) est monté, par le cadre périphérique sensiblement en forme de U, sur le cadre de fixation (30) ou sur les éléments de cadre (31, 32, 33).

5. Soufflet (10) selon la revendication 4,
**caractérisé en ce que**,
le cadre périphérique sensiblement en forme de U ou les éléments de cadre (31, 32, 33) sont respectivement réalisés sous forme de rails, dans lequel les rails présentent dans leur base un guidage en forme de C qui s'étend tout au long du rail.

6. Soufflet (10) selon les revendications 4 ou 5,
**caractérisé en ce que**,
le complément de charnière (42) est coulissant, mais peut être bloqué en position dans un guidage en forme de C.
